# EUROPEAN PATENT APPLICATION

(11) **EP 0 649 725 A2**
(43) Date of publication of application: **26.04.1995**
(21) Application number: 94307314.8
(22) Date of filing: 05.10.1994
(51) Int. Cl.: B29C 51/10, B29C 51/14

(54) **Low pressure thermoforming of discontinuous fiber compositions**

(30) Priority: 15.10.1993 US 138513
(71) Applicant: GENERAL ELECTRIC COMPANY, Schenectady, NY 12345 (US)
(72) Inventor: Lee, Walter J., CH-1001 Lausanne (CH); Kamienski, Joseph F., Massachusetts 01201 (US); Downey, Christina, Maynard, Massachusetts 01754 (US)
(74) Representative: Pratt, Richard Wilson

(57) **Abstract**

A low pressure thermoforming process is provided for forming fiber reinforced thermoplastic sheets into shaped articles. The sheets comprise chopped glass fibers having lengths of between 0.1 and 1.0 inches and thermoplastic resin. The sheets are thermoformed by heating the sheets to a temperature above the glass transition temperature of the resin and the applying of pressure of between 10 psi and 25 psi to the heated sheet to form the sheet into the desired shaped article.

## Description

### BACKGROUND OF THE INVENTION

### Field of Invention

The present invention relates to process for making fiber reinforced thermoplastic composites, and more particularly relates to a low pressure thermoforming process for making thermoplastic composites having reinforcing fibers.

### Description of the Related Art

Aqueous methods of making fiber reinforced composite materials from an aqueous slurry of, solid polymer and reinforcing material are known. See Published European Patent Applications 0,148,760 and 0,148,761, Wessling et al., U.S. Patent No. 4,426,470 issued January 17, 1984 and Gatward et al., U.S. Patent No. 3,716,449 issued February 13, 1973, all of which are incorporated herein by reference. In general these reinforced polymer composites have a uniform mixture of fiber, polymer and optionally binder and are prepared by performing dilute aqueous slurries of a solid heat-fusible organic polymer, a reinforcing material and optionally a latex binder.

Reinforcing materials disclosed have included organic and inorganic products such as graphite, metal fibers, aromatic polyamides, cellulose and polyolefin fibers, and typically have included glass fibers such as chopped glass strands having a length of 1/8 to 1 inch (about 3.2 to 25.4 mm) or milled glass fibers which generally have a length of about 1/32 to 1/8 inch (about 0.79 to 3.2 mm). These reinforcing fibers have typically been formed into the final shaped composite article by injection molding or compression molding the composite under high pressures (for example on the order of 1000 psi and above) in order to cause the composite material to flow into the desired shape.

Accordingly, there is a need for low pressure processes for the making of shaped articles from fiber reinforced composites.

### Summary of the Invention

This invention provides a low pressure, for example, between 10 and 15 psi, process for making reinforced thermoplastic composites which comprises forming a dilute aqueous slurry of a solid, water-insoluble, heat-fusible organic polymer in particulate form and a chopped glass fiber reinforcing material, collecting the solids in the form of a continuous sheet or mat, dewatering, drying, heating and forming the sheet at an elevated temperature and low pressure.

### Detailed Description of the Invention

The process of this invention involves (1) an aqueous medium, preferably (2) a binder, usually at least partially in the form of a latex which contains either anionic or cationic bound charges, (3) a heat-fusible organic polymer which is in particulate form, (4) reinforcing fibers, and (5) optionally a flocculent.

In the process, a dilute aqueous slurry is prepared containing the heat fusible organic polymer particulates and the reinforcing fibers. The slurry is agitated and then uniformly distributed onto a porous support and is allowed to drain to form a wet mat, the wet mat is optionally passed through press rolls and then dried, such as passing the wet mat through a series of heated dryer rolls to obtain a dried mat which optionally is rolled onto a cylinder or collected as a flat sheet stock. The dried mat may then be subjected to various kinds of treatment for the intended use such as compression molding the dried mat into articles. Optionally, a binder material is employed in the dilute aqueous slurry and the solids are flocculated during agitation with a polymeric flocculent having an opposite charge to that of the latex binder. Suitable binders and flocculents are set forth in Wessling et al., U.S. Patent No. 4,426,470 issued January 17, 1984 which is incorporated herein by reference. Suitable latexes which can be used in the present invention include those described in U.S. Pat. No. 4,056,501, issued November 1, 1977, to Gibbs et al., incorporated herein by reference.

The invention requires a normally solid, heat fusible organic polymer. By "heat fusible" is meant that the polymer particles are capable of deformation under heat to join into an unitary structure. The heat fusible polymers are preferably thermoplastic resins but may also be thermosetting polymers. The heat fusible organic polymer component of the present invention is desirably a hydrophobic, water-insoluble addition polymer. These polymers are in particulate form and may be in the form of a powder or a dispersion. Suitable heat fusible organic polymers include addition and condensation polymers such as, for example, polyethylene; ultra high molecular weight polyethylene; chlorinated polyethylene; bipolymers of ethylene and acrylic acid; polypropylene; nylons (polyamides); polyesters such as polybutylene terephthalate; terpolymers of acrylonitrile, butadiene and styrene; polyvinylchloride; bipolymers of a major proportion of vinylidene chloride and a minor proportion of at least one other alpha,beta-ethylenically unsaturated monomer copolymerizable therewith; aromatic polycarbonate and styrene homopolymers or copolymers such as styrene-acrylonitrile copolymers. The polymer particulates generally and advantageously have a particle size in the range of 1 to 400 microns. The polymers (thermoplastic resins) are generally employed in an amount of from about 60 to 90 percent by weight (preferably from 60 to 80 percent by weight) of the solids in the slurry, dry weight basis. Correspondingly the final composite comprises the polymer at a level of from 60 to 90 percent by weight (preferably from 60 to 80 percent by weight) based on the total weight of the composition. A particularly preferred organic polymer is a polypropylene powder. Of course, blends of polymers may be used.

The reinforcement fibers are chopped glass fibers having a length of 0.1 to 1.0 inches, preferably from 1/8 to 1 inch (about 3.2 to 25.4 mm). The glass fibers are advantageously heat cleaned and, to improve impact properties, such fibers may be compatibilized by having a thin coating of, for example a polyolefin resin or starch thereon. The fibers are preferably surface treated with chemical sizing or coupling agents which are well known in the art. The reinforcing material is employed in an amount of from about 10 to about 40 weight percent of the solids in the slurry, dry weight basis, more preferably from 20 to 40 percent by weight thereof. Correspondingly, the final composite comprises the polymer at a level of from 10 to 40 percent by weight (preferably from 20 to 40 percent by weight) based on the total weight of the composite.

The reinforcing fiber used in the process and composites of the present invention have a distribution wherein at least 95% of said fibers have lengths of less than 2 inches, more preferably less than 1.5 inches, and even more preferably less than 1.1 inch.

The process for making the final composite formed article involves first forming a web or sheet as defined above, followed by heating the sheet to a temperature above the softening point (glass transition temperature (140°C for polypropylene)) of the thermoplastic material and forming the heated sheet at a pressure of between 10 to 25 pounds per square inch (vacuum and/or applied pressure optionally utilizing a removable rubbery bladder), preferably between 10 to 15 pounds per square inch, into a final article.

The composites of the invention may also, optionally, contain a variety of other ingredients. Minor amounts, for example, 1-33% by weight, of fillers such as silicon dioxide (Novacite), CaCO₃, MgO, CaSiO₃ (wollastonite) and mica may be incorporated in the composites of this invention if desired. Pigments or dyes may be added to impart opacity and/or color. Various chemical additives such as antioxidants, UV stabilizers, thickeners, foaming agents, anti-foaming agents, bacteriocides, electromagnetic radiation absorption agents, etc., may also be used.

The composites are formed by blending the heat-fusible polymer particulates, the reinforcing material, and the water, agitating to form a slurry, dewatering to form a continuous mat, drying, and applying heat to the mat to bring the thermoplastic resin to its softening point and then low temperature forming the sheet-like composite structure which can then be stamped to form the final article.

This method is conveniently and preferably carried out by first stirring the reinforcing material in water until it is uniformly disbursed, then slowly adding the heat-fusible polymer, and stirring the materials throughout this portion of the process. This slurry of water, heat-fusible polymer, reinforcing material and optionally latex binder and flocculent preferably has a total solids content of 0.01 to 5% solids by weight, and more preferably 0.02 to 0.5% solids by weight based on the total weight of the slurry.

The sheet-forming and dewatering process may be accomplished by any conventional paper making apparatus such as a sheet mold or a Fourdrinier or cylinder machines.

After the mat is formed into a dewatered sheet, it may be desirable to densify the sheet by pressing it with a flat press or by sending it through calendaring rolls. Densification after drying of the mat is particularly useful for increasing the tensile and tear strength of the mat. Drying of the mat may be either air drying at ambient temperatures or oven drying.

Heating may be achieved by radiation, convection, or conduction heating. Matched tools, or pressure bladders, plugs, or air pressure may be used to form the part. Air pressure forming requires that an impermeable layer, through which air cannot pass, is required to seal the vacuum and/or pressure medium. The impermeable layer may be an unreinforced resin sheet or film such as a cast acrylic sheet having a thickness of from 0.06 inches to 0.125 inches, which can be incorporated as a surface appearance enhancer, or a rubbery bladder, which is removable, may be used such as silicone or neoprene bladders.

## Claims

**1.** A low pressure process for forming a shaped, fiber reinforced thermoplastic articles, said process comprising:
a) making a fiber reinforced composite sheet comprising 60 to 80 percent by weight thermoplastic resin based on the total weight of the sheet and 20 to 40 percent by weight chopped glass fiber based on the total weight of the sheet, said chopped glass fibers having lengthes of between 0.10 inches and 1.0 inches,
b) heating said composite sheet to a temperature above the glass transition temperature of said thermoplastic resin,
c) applying a thermoforming pressure of between 10 to 25 pounds per square inch to said heat sheet to form said shaped articles.

**2.** The process of Claim 1 wherein said pressure is between 10 and 15 pounds per square inch.

**3.** The process of Claim 1 wherein composite sheet comprises an unreinforced resin film layer as an air barrier.

**4.** The process of Claim 3 wherein said air pressure is created by creating a vacuum on one side of said sheet.

**5.** The process of Claim 1 wherein said thermoplastic resins is selected from the group consisting of polypropylene, polycarbonate, polybutylene terephthalate, and blends thereof.

**6.** The process of Claim 3 wherein said film has a thickness of between 0.060 inches and 0.125 inches.

**7.** The process of Claim 6 wherein said film is a polymethylemethacrylate.

**8.** A low pressure process for forming a fiber reinforced sheet, said sheet comprising from 60 to 80 percent by weight thermoplastic resin based on the total weight of the sheet and from 20 to 40 percent by weight chopped glass fibers based on the total weight of the sheet, said process comprising:
a) applying an unreinforced thermoplastic film to said sheet,
b) heating said sheet to a temperature above the glass transition temperature of said thermoplastic resin,
c) applying a pressure of from 10 to 25 pounds per square inch to said sheet to form said sheet into an article.

**8.** A process consisting essentially of:
a) heating a fiber reinforced thermoplastic sheet consisting essentially of a thermoplastic resin and glass fibers having lengths between 0.1 and 1.0 inches, to a temperature above the glass transition temperature of the thermoplastic resin; and
b) applying a pressure of between 10 and 25 pounds per square inches to form said sheet into said article.
